# DEMANDE DE BREVET EUROPEEN

(11) **EP 2 252 114 A1**
(43) Date de publication de la demande: **17.11.2010**
(21) Numéro de dépôt: 10161227.3
(22) Date de dépôt: 27.04.2010
(51) Int. Cl.: H04W 48/08

(54) **Système et procédé de localisation d'un terminal mobile connecté à une femto-cellule**

(30) Priorité: 13.05.2009 FR 0902304
(71) Demandeur: Societé Française du Radiotéléphone, 75008 Paris (FR)
(72) Inventeur: Laune, Marthe, 78000, Versailles (FR); Fattouch, Imad, 75013, Paris (FR); Li, Huimin, 92160, Antony (FR)
(74) Mandataire: Debay, Yves

(57) **Abrégé**

La présente invention concerne un procédé de localisation d'un terminal mettant en jeu un système de localisation, **caractérisé en ce que** le procédé comprend :
- un scannage (S1) par la femto-cellule de l'ensemble des cellules macro 2G et 3G du réseau qui présentent une couverture au moins partiellement identique à celle de la femto-cellule,
- une détection d'au moins une cellule macro,
- une récupération (S4) d'un code de zone de service 3G (*Service Area Code,* abrégé *SAC*) depuis une installation du coeur du réseau,
- une mémorisation du SAC par la femto-cellule,
- une intégration (S5) du code SAC mémorisé par la femto-cellule avec les informations transmises à au moins une installation du coeur du réseau lorsqu'un terminal est connecté à la femto-cellule,
- une corrélation d'au moins un code SAC avec une localisation géographique.

## Description

La présente invention se rapporte au domaine des systèmes de localisation d'un terminal mobile connecté à un réseau et plus particulièrement au domaine des systèmes de localisation d'un terminal mobile connecté à une femto-cellule d'un réseau.

Les femto-cellules peuvent être définies comme des cellules radioélectriques qui permettent notamment d'élargir la portée des systèmes d'accès numériques distribués dans un espace de dimensions limitées. Une femto-cellule est, comme son nom l'indique, une cellule radio avec une puissance inférieure à celle d'une antenne relais capable d'assurer la communication à faible puissance entre l'intérieur et une liaison extérieure pour, entre autres, les technologies 2G (seconde génération) et 3G (troisième génération) et relayer à l'intérieur de l'entreprise ou du domicile, les flux numériques du réseau fixe vers le mobile en supprimant la nécessité d'avoir des terminaux dédiés. A l'origine de la femto-cellule, la « femto-station » forme la base du réseau des communications cellulaires installées dans l'espace délimité qui crée par son fonctionnement cette petite cellule. Ces « femto-stations » sont connectables au réseau par une liaison filaire d'accès en ADSL (*Asymmetric Digital Subscriber Line*) ou une liaison à fibres optiques ou par un modem optique ou par un modem câble. Le réseau de communication comprend tout un ensemble d'équipements qui traitent l'information, la gèrent, la transportent, la stockent tout en permettant la connexion et l'intégration de tous ces équipement de façon cohérente. Une passerelle est utilisée pour gérer les équipements domestiques qui doivent interfonctionner en protocole IP (*Internet Protocol*) à un moment ou à un autre, soit par câblages adaptés ou par des liaisons radioélectriques internes à l'espace de fonctionnement de la femto-cellule.

C'est ainsi que les femto-cellules permettent également de former des points d'accès qui intègrent plusieurs technologies, imposant du même coup la miniaturisation, l'intégration et la convergence de média, fixe et mobile. Ces femto-cellules ont notamment pour objectif d'être utilisées comme points d'accès 2G et 3G intégrés dans un boîtier de fournisseur d'accès ADSL pour améliorer automatiquement la couverture des téléphones mobiles de troisième génération, permettant la bascule des communications utilisant un terminal mobile standard sur le réseau d'accès IP au lieu de passer sur les antennes des opérateurs. Les femto-cellules utilisent ainsi le haut débit pour fournir des services voix et données de la même manière qu'une station BTS (*Base Transceiver Station*) ou node B d'un macro-réseau en encapsulant le trafic de la téléphonie mobile sur un réseau Internet. L'utilisation de telles femto-cellules permet alors de s'affranchir d'antennes surpuissantes en quelques lieux au profit d'une multitude de « mini-antennes » qui sont éparpillées à travers l'ensemble d'une zone réalisant alors une amélioration du maillage du réseau et de leur capacité de débit.

Les réseaux cellulaires 2G et 3G réalisés par les maillages des BTS et des nodes B permettent une localisation des terminaux mobiles connectés à ces réseaux, grâce à l'utilisation d'un ou de plusieurs identifiants des cellules qui interviennent dans les communications. Selon le type de réseau, GSM ou UMTS, ces identifiants sont un identifiant de cellule (*Ce*// *Identity,* abrégé *Cell Id*) ou un code de zone de service (*Service Area Code,* abrégé *SAC*), et correspondent à une couverture géographique du réseau. En revanche, dans le cas des femto-cellules, celles-ci sont installées, voire déplacées, géographiquement par l'utilisateur final de la cellule. De plus, la configuration des paramètres radio et des identifiants des cellules n'est pas opérée par le personnel de l'opérateur mais également par l'utilisateur final de la cellule. Par ailleurs, les installations d'un réseau macro ne sont en mesure de gérer qu'un nombre limité de cellules. En effet, une MSC (*Mobile Switching Center*) n'est à l'heure actuelle pas capable de gérer plus de 64000 cellules. Le nombre de femto-cellules étant susceptible d'atteindre un ordre de grandeur bien plus important que le nombre de cellules d'un réseau macro, les installations centrales des réseaux actuels ne sont donc pas en mesure de géolocaliser la couverture assurée par l'ensemble d'un parc de femto-cellules. L'utilisation d'un terminal connecté sur un réseau de femto-cellules pour effectuer un appel d'urgence présente comme inconvénient majeur d'empêcher toute localisation du terminal appelant qui permette un routage de l'appel vers le centre de gestion d'urgence qui est le plus proche pour intervenir.

La présente invention a pour objet de supprimer un ou plusieurs inconvénients de l'art antérieur en proposant notamment une solution qui permette non seulement de localiser la couverture d'une femto-cellule particulière mais également de router tous les appels d'urgence effectués depuis un terminal connecté à une femto-cellule du réseau.

Cet objectif est atteint grâce à un système de localisation d'un terminal mobile 2G ou 3G sous couverture d'une femto-cellule intégrée au sein d'un réseau comprenant l'ensemble des installations nécessaires au fonctionnement du réseau, **caractérisé en ce que** le système comprend au moins :
- un dispositif intégré à chaque femto-cellule arrangé pour opérer un scannage de l'ensemble des cellules 2G et 3G du réseau présentant une couverture au moins partiellement identique à celle de la femto-cellule,
- un dispositif de sélection de la cellule 2G ou 3G dont la couverture présente une superposition optimale avec la couverture de la femto-cellule,
- un dispositif de récupération de l'identifiant de la cellule sélectionnée,
- un dispositif de récupération et de mémorisation d'un code de zone de service 3G (*Service Area Code,* abrégé *SAC*) auprès d'une installation du coeur du réseau, le code SAC correspondant à l'identifiant de la cellule sélectionnée,
- un dispositif d'intégration du code SAC mémorisé par la femto-cellule avec les informations transmises à au moins une installation du coeur du réseau lorsqu'un terminal est connecté au réseau via la femto-cellule,
- un dispositif de corrélation d'au moins un code SAC avec une localisation géographique.

Un autre objectif de l'invention est de proposer un procédé adapté pour la mise en oeuvre des systèmes de l'invention.

Cette solution est atteinte grâce à un procédé de localisation d'un terminal mettant en jeu un système de localisation selon une des revendications précédentes, **caractérisé en ce que** le procédé comprend :
- une étape de scannage par la femto-cellule de l'ensemble des cellules macro 2G et 3G du réseau qui présentent une couverture au moins partiellement identique à celle de la femto-cellule,
- une étape de détection d'au moins une cellule macro,
- une étape de récupération d'un code de zone de service 3G (*Service Area Code,* abrégé *SAC*) depuis une installation du coeur du réseau,
- une étape de mémorisation du SAC par la femto-cellule,
- une étape d'intégration du code SAC mémorisé par la femto-cellule avec les informations transmises à au moins une installation du coeur du réseau lorsqu'un terminal est connecté au réseau via la femto-cellule,
- une étape de corrélation d'au moins un code SAC avec une localisation géographique.

Cet objectif est également atteint grâce à un procédé de routage d'un appel d'urgence émis depuis un terminal mobile 2G ou 3G sous couverture d'une femto-cellule, intégrant un procédé de localisation d'un terminal selon l'invention, **caractérisé en ce que** le procédé comprend une étape de routage comprenant notamment une étape de détermination d'un centre de service d'urgence localisé au plus proche de la couverture correspondant au code SAC grâce à une base de donnée corrélant chaque code SAC d'une femto-cellule à un centre de service d'urgence.

L'invention, avec ses caractéristiques et avantages, ressortira plus clairement à la lecture de la description faite en référence aux dessins annexés dans lesquels :

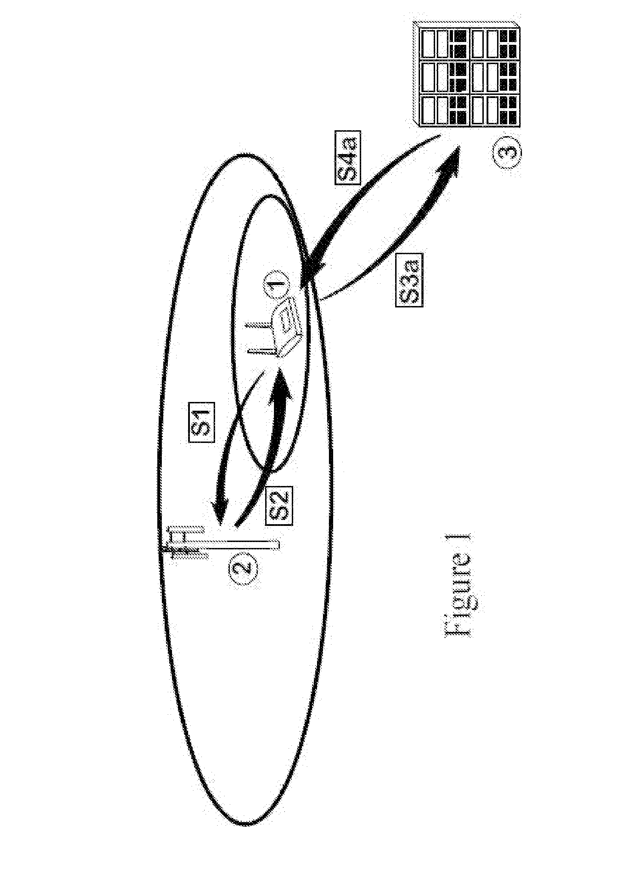

- la figure 1 représente le schéma d'un exemple de différentes étapes selon une première variante du mécanisme de préparation à la localisation d'un terminal mobile communiquant sous couverture d'une femto-cellule selon l'invention,

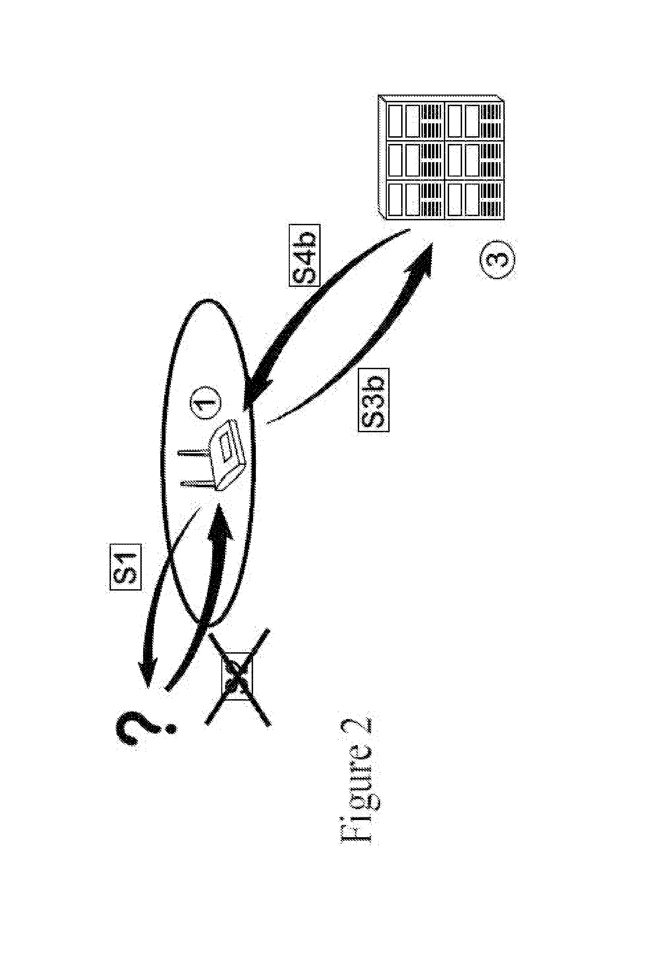

- la figure 2 représente le schéma d'un exemple de différentes étapes selon une seconde variante du mécanisme de préparation à la localisation d'un terminal mobile communiquant sous couverture d'une femto-cellule selon l'invention,

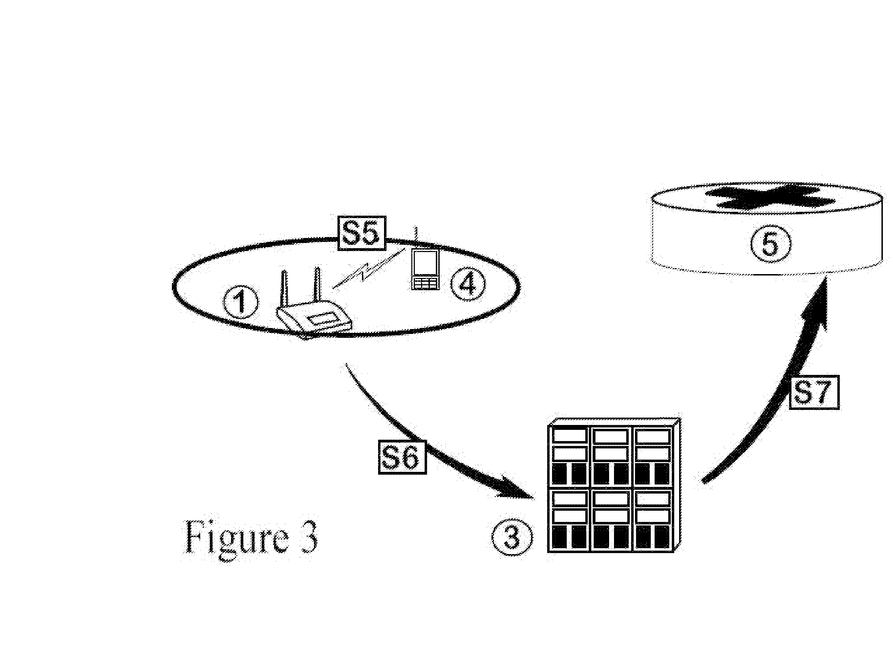

- la figure 3 représente le schéma d'un exemple de différentes étapes d'un mécanisme général de la localisation d'un terminal mobile communiquant sous couverture d'une femto-cellule selon l'invention.

Le système de localisation d'un appel provenant d'un terminal (4) mobile fonctionnant sous couverture d'une femto-cellule (1) implique une identification et une localisation de la femto-cellule. Pour ce faire, le système fait intervenir avec chacune des femto-cellules, un dispositif intégré du réseau et arrangé pour effectuer un scannage (S1) de l'ensemble des cellules macro (2), 2G et 3G, positionnées sur une couche du réseau différente de celle de la femto-cellule mais qui présentent une zone de couverture qui se superpose à la zone de couverture de la femto-cellule. Selon un mode de réalisation préféré, le scannage du voisinage de la femto-cellule est effectué à chaque fois que la procédure de démarrage de la femto-cellule est déclenchée, c'est-à-dire à chaque fois que cette dernière est mise sous tension.

Une fois plusieurs cellules macro détectées, celles-ci sont sélectionnées par un dispositif de sélection afin de ne conserver que la cellule macro dont la couverture présente une superposition optimale avec la couverture de la femto-cellule. Cette sélection est notamment arrangée pour conserver préférentiellement une cellule macro 3G au détriment d'une cellule macro 2G, à zone de couverture identique et optimale avec la zone de couverture de la femto-cellule.

Une fois qu'une cellule macro est sélectionnée, cette cellule macro est identifiée (S2) par un dispositif de récupération de l'identifiant de la femto-cellule. Cette identifiant correspond alors soit à un code de zone de service (*Service Area Code,* abrégé *SAC*) si la cellule sélectionnée est une cellule 3G, soit à un identifiant cellulaire (*Cell Identity,* abrégé *Ce*// *Id*) si la cellule sélectionnée est une cellule 2G.

Après récupération de cet identifiant cellulaire, la femto-cellule, par l'intermédiaire d'un dispositif de récupération d'un identifiant SAC femto, transmet (S3a) l'identifiant récupéré correspondant à la cellule macro sélectionnée auprès d'une installation (3) du coeur du réseau accompagné d'une requête pour l'attribution d'un identifiant pour la femto-cellule. En réponse à sa requête, la femto-cellule récupère (S4a) alors un code de zone de service qui constitue un identifiant attribué à la femto-cellule par l'installation du coeur du réseau. Cet identifiant est alors mémorisé par la femto-cellule pour être utilisé (S5) par un dispositif d'intégration, en association avec les informations transmises par la femto-cellule lorsqu'une communication fait intervenir un terminal mobile connecté à la femto-cellule. Ce code SAC femto attribué à la femto-cellule par l'installation (3) du coeur du réseau correspond alors à l'identifiant de la cellule macro détectée et sélectionnée par la femto-cellule.

Il convient de remarquer qu'une même cellule macro pouvant avoir une couverture qui se superpose sur les couvertures respectives de plusieurs femto-cellules, ces femto-cellules peuvent alors se voir attribuer un même code SAC femto.

Il peut arriver que le système selon l'invention se trouve confronté à une femto-cellule qui ne partage sa couverture avec aucune cellule macro de son voisinage. La femto-cellule transmet (S3b) alors à une installation du coeur du réseau un identifiant qui lui est propre et permet de la différencier de femto-cellules analogues. A partir de cet identifiant, l'installation du coeur du réseau effectue une recherche dans au moins une base de données pour transmettre (S4b) à la femto-cellule un code SAC correspondant au code INSEE associé à l'adresse déclarée par l'utilisateur de la femto-cellule, l'utilisateur de la femto-cellule pouvant être différent de l'utilisateur du terminal mobile connecté à la femto-cellule.

Il peut également arriver que l'adresse déclarée par l'utilisateur de la femto-cellule soit manquante ou erronée. Dans ce cas, l'installation du coeur n'est pas en mesure de fournir un code SAC en lien avec un code INSEE particulier. Le code SAC femto transmis au dispositif de récupération de la femto-cellule correspond alors à un code SAC défini par défaut.

La localisation d'un terminal mobile qui effectue une communication en faisant intervenir une connexion à une femto-cellule s'effectue alors grâce à la transmission avec les informations transmises lors de l'appel à au moins une installation du coeur du réseau, du code SAC attribué et mémorisé par la femto-cellule.

Le système de localisation d'un terminal mobile comprend alors une base de données permettant une corrélation entre le code SAC femto transmis par la femto-cellule et la position géographique de la cellule.

Selon une particularité de l'invention, le système de localisation décrit précédemment est intégré dans un système de routage d'appels d'urgence. Ce routage (S6) s'opère en faisant intervenir notamment la détermination d'un centre (5) de service d'urgence localisé au plus proche de la couverture correspondant au code SAC de la femto-cellule. Cette détermination est effectuée grâce à une base de données corrélant chaque code SAC de femto-cellule à un centre de service d'urgence.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de localisation d'un terminal (4) mobile 2G ou 3G sous couverture d'une femto-cellule (1) intégrée au sein d'un réseau comprenant l'ensemble des installations nécessaires au fonctionnement du réseau, **caractérisé en ce que** le système comprend au moins :
- un dispositif intégré à chaque femto-cellule arrangé pour opérer un scannage de l'ensemble des cellules (2) 2G et 3G du réseau présentant une couverture au moins partiellement identique à celle de la femto-cellule,
- un dispositif de sélection de la cellule 2G ou 3G dont la couverture présente une superposition optimale avec la couverture de la femto-cellule,
- un dispositif de récupération de l'identifiant de la cellule sélectionnée,
- un dispositif de récupération et de mémorisation d'un code de zone de service 3G (*Service Area Code,* abrégé *SAC*) auprès d'une installation (3) du coeur du réseau, le code SAC correspondant à l'identifiant de la cellule sélectionnée,
- un dispositif d'intégration du code SAC mémorisé par la femto-cellule (1) avec les informations transmises à au moins une installation du coeur du réseau lorsqu'un terminal est connecté au réseau via la femto-cellule,
- un dispositif de corrélation d'au moins un code SAC avec une localisation géographique.
le système comprend au moins un dispositif de récupération d'un code de zone de service 3G auprès d'une installation du coeur du réseau, le code SAC correspondant au code INSEE associé à l'adresse déclarée par l'utilisateur de la femto-cellule mémorisé dans une installation du coeur du réseau

2. Système de localisation d'un terminal mobile 2G ou 3G sous couverture d'une femto-cellule selon la revendication précédente, **caractérisé en ce que** le système comprend au moins un dispositif de récupération d'un code de zone de service 3G auprès d'une installation du coeur du réseau, le code SAC correspondant à l'identifiant d'une cellule définie par défaut.

3. Système de localisation d'un terminal mobile 2G ou 3G sous couverture d'une femto-cellule selon une des revendications précédentes, **caractérisé en ce que** le code SAC fourni par une installation du coeur du réseau à la femto-cellule est susceptible d'être un code identique pour plusieurs femto-cellules.

4. Système de routage d'un appel d'urgence émis depuis un terminal mobile 2G ou 3G sous couverture d'une femto-cellule, **caractérisé en ce qu'**il intègre au moins un système de localisation du terminal mobile selon une des revendications précédentes.

5. Système de routage d'un appel d'urgence selon la revendication précédente, **caractérisé en ce que** le système comprend au moins un dispositif de routage associé à une base de donnée corrélant à chaque code SAC d'une femto-cellule, un centre (5) de service d'urgence localisé au plus proche de la couverture correspondant au code SAC.

6. Procédé de localisation d'un terminal mettant en jeu un système de localisation selon une des revendications précédentes, **caractérisé en ce que** le procédé comprend :
- une étape de scannage (S1) par la femto-cellule de l'ensemble des cellules macro 2G et 3G du réseau qui présentent une couverture au moins partiellement identique à celle de la femto-cellule,
- une étape de détection d'au moins une cellule macro,
- une étape de récupération (S4) d'un code de zone de service 3G (*Service Area Code,* abrégé *SAC*) depuis une installation du coeur du réseau,
- une étape de mémorisation du SAC par la femto-cellule,
- une étape d'intégration (S5) du code SAC mémorisé par la femto-cellule avec les informations transmises à au moins une installation du coeur du réseau lorsqu'un terminal est connecté au réseau via la femto-cellule,
- une étape de corrélation d'au moins un code SAC avec une localisation géographique,
**en ce que** l'étape de l'étape de détection révélant au moins une cellule macro, le procédé comprend également :
- une étape de sélection d'une cellule macro détectée,
- une étape de récupération (S2) de l'identifiant de la cellule macro détectée,
- une étape de transmission (S3a) de l'identifiant de la cellule macro à un élément du coeur du réseau,
et **en ce que** l'étape de récupération (S4a) auprès de l'élément du coeur du réseau concerne un code SAC correspondant à l'identifiant de la cellule macro sélectionnée

7. Procédé de localisation d'un terminal selon la revendication précédente, **caractérisé en ce que**, l'étape de détection révélant plusieurs cellules macro, le procédé comprend une étape de sélection d'une cellule 3G au détriment d'une cellule 2G.

8. Procédé de localisation d'un terminal selon la revendication 7, **caractérisé en ce que**, l'étape de détection ne révélant la présence d'aucune cellule macro, le procédé comprend :
- une étape de transmission (S3b) d'un identifiant de la femto-cellule à un élément du coeur du réseau,
et **en ce que** l'étape de récupération (S4b) auprès de l'élément du coeur du réseau porte sur le code SAC correspondant au code INSEE associé à l'adresse déclarée par l'utilisateur de la femto-cellule auprès d'une installation du coeur du réseau.

9. Procédé de localisation d'un terminal selon la revendication précédente, **caractérisé en ce que**, l'étape de détection ne révélant la présence d'aucune cellule macro et le code INSEE n'étant pas renseigné, l'étape de récupération auprès de l'élément du coeur du réseau porte sur le code SAC correspondant à l'identifiant d'une cellule définie par défaut.

10. Procédé de routage d'un appel d'urgence émis depuis un terminal mobile 2G ou 3G sous couverture d'une femto-cellule, intégrant un procédé de localisation d'un terminal selon une des revendications 7 à 11, **caractérisé en ce que** le procédé comprend une étape de routage (S6) comprenant notamment une étape de détermination d'un centre de service d'urgence localisé au plus proche de la couverture correspondant au code SAC grâce à une base de donnée corrélant chaque code SAC d'une femto-cellule à un centre de service d'urgence.
